## Europäisches Patentamt
## European Patent Office
## Office européen des brevets

(19)

(11) Publication number: **0 013 050**
**B1**

(12) **EUROPEAN PATENT SPECIFICATION**

(45) Date of publication of patent specification: **09.03.83**

(21) Application number: **79200764.3**

(22) Date of filing: **14.12.79**

(51) Int. Cl.³: **C 02 F 1/46, B 01 D 13/02, C 02 F 9/00**

(54) **Process for the removal of volatile ionisable components from aqueous streams.**

(30) Priority: **28.12.78 GB 5012078**

(43) Date of publication of application:
**09.07.80 Bulletin 80/14**

(45) Publication of the grant of the patent:
**09.03.83 Bulletin 83/10**

(84) Designated Contracting States:
**DE FR GB NL**

(56) References cited:
DE - C - 1 097 075
FR - A - 2 238 515
GB - A - 1 019 507
GB - A - 1 044 518
GB - A - 1 067 500
US - A - 2 983 656
US - A - 3 291 713
US - A - 3 554 691
US - A - 3 896 015
US - A - 4 107 015

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Blytas, George Constantin**
**14324 Appletree**
**Houston, Texas 77079 (US)**
Inventor: **Maas, Rudolf Jakob**
**Badhuisweg 3**
**NL-1031 CM Amsterdam (NL)**
Inventor: **Van Aken, Andreas Bernardus**
**Badhuisweg 3**
**NL-1031 CM Amsterdam (NL)**
Inventor: **Van Schalkwijk, Christiaan**
**Badhuisweg 3**
**NL-1031 CM Amsterdam (NL)**

(74) Representative: **Puister, Antonius Tonnis, Mr. et al,**
**P.O. Box 302**
**NL-2501 CH The Hague (NL)**

Courier Press, Leamington Spa, England

# Process for the removal of volatile ionisable components from aqueous streams

This invention relates to a process for treating aqueous streams to remove volatile ionisable components, and more specifically a volatile acid and a volatile base. It is particularly suitable for treatment of sour water to remove ammonia and hydrogen sulphide and other contaminants.

Conventionally, sour water, particularly from refineries, is treated by stripping it with steam. Such a process is capable of producing treated water which meets the present waste water effluent regulations in most countries of the world. It is however expensive to operate because of the large quantity of steam required, particularly at lower concentrations of the contaminants. For instance, to achieve a, say, 50% reduction in the volatile components, very nearly the same quantity of steam will be required whether the initial concentration is in the order of 20000 ppm or 200 ppm. In this specification the abbreviations "ppm" and "ppmw" mean parts per million and parts per million by weight, respectively.

An object of the invention is to provide a process for reducing the concentration of volatile ionisable components in an aqueous solution to a very low level in a way that is more efficient in its use of energy.

In accordance with the invention a process for treating an aqueous stream to remove volatile acidic and volatile basic components from it comprises subjecting the stream to an electrodialysis step in which acidic and basic components migrate from the stream through fixed anion and cation exchange membranes respectively to one or more concentrate streams and steam stripping concentrate stream(s), in order to remove volatile acidic and basic components.

The process is considered particularly suitable for treating refinery sour water containing $H_2S$ and $NH_3$. In aqueous solution the larger fraction of the sulphur in the sulphide is in the monovalent $HS^-$ or undissociated $H_2S$ form, very little $S^=$ being present. In the case where there is an excess of $NH_3$ over $H_2S$ a significant proportion of the ammonia will be in the undissociated form. In addition, sour water often contains other ionic species, for example, phenolates, formates, cyanates, carbonates and the like. It may also contain some metal ions such as iron, cobalt and vanadium in small amounts. Unlike a NaCl solution, for example, sour water is not necessarily a good electrolyte and behaves very differently. Not only are the equilibria of the various reactions substantially different, but also the molar ratio of $NH_4^+$ cations to the $HS^-$ anions is not necessarily 1 to 1. We have, however, found that it is possible to concentrate such sour water streams by electrodialysis even at quite low concentrations, so that the resulting dilute stream may have a very low final $H_2S$ and $NH_3$ content. This stream is thereby also rendered suitable for being subjected to any further treatment required, e.g. by biological means.

In general the efficiency of the electrodialysis step is high in terms of electric power utilisation. Its efficient use of energy stems from the fact that it is virtually only the ions which pass through a membrane to a concentrate stream which use up electric current.

It has further been found that the overall efficiency of the process can be increased by recirculating at least part of the concentrate stream(s) after steam stripping to the concentrate side in the electrodialysis step, thereby increasing the concentration in the concentrate stream(s) of that step. In order to prevent a build-up of electrolysed non-volatile salts which might otherwise accumulate in the concentrate circuit, part of the steam-stripped concentrated stream may be bled off and, preferably, subjected to further steam stripping. In the latter case, therefore, the recirculated part of the concentrated stream(s) is obtained from an intermediate steam stripping stage, all or part of the remainder not so recirculated (which may or may not be smaller than the recirculated portion) being subjected to further steam stripping, possibly in a separate (auxiliary) steam stripping column which is therefore connected in parallel with the electrodialysis step. This improves the overall effluent from the process. The steam stripped aqueous material so obtained may if desired be combined with the dilute stream issuing from the electrodialysis step, and so may the bleed-stream. Where no non-volatile salts are present the bleed-off or auxiliary stripper circuit can be omitted.

In order to obtain a more effective use of the membranes and to increase the concentration in the concentrate stream, the electrodialysis step may be provided with a feedback loop or loops through which some of the — dilute and/or concentrate — flow (preferably the latter) is recirculated directly, i.e. without having been steam stripped first.

The electrodialysis step may comprise a number of electrodialysis stages connected in parallel or in series, preferably the latter, again so as to increase the concentration in the concentrate stream. Part or all of these stages may again be provided with (a) feedback loop(s) for recirculating concentrate and/or dilute flow.

The concentrate from the electrodialysis step is conveniently steam stripped from a high concentration, generally in excess of 12000 ppm combined $NH_3$ and $H_2S$. At high concentrations, steam stripping is more attractive in energy terms as a relatively small quantity of steam can effect a substantial reduction, in absolute terms, of the sour components in the

**0 013 050**

concentrate stream. Steam stripping is furthermore also conveniently carried out to a sufficiently low concentration that in the electrodialysis steps so called "back diffusion" (i.e. reverse flow across the membranes) of ionised components does not become significant. This back diffusion may also be reduced by having the concentrate stream(s) flow in countercurrent with the dilute stream(s).

Where it is desired that the treated stream shall be very pure, e.g. sufficiently so to provide boiler feed water, it may be advantageous to use purer water in the concentrate stream(s) in the last stage or stages of the electrodialysis step.

In the electrodialysis step it is preferable that an (approximate) balance be maintained between acidic and basic components, and this can be effected by adding (back) to the dilute stream(s) a component in which it is deficient — normally an acidic one. This may either be done at the beginning or at an intermediate stage — if present — or both, and in spite of the fact that more acidic components in total will have to be removed it can lead to lower end concentrations and to economies in capital cost and operation.

In certain circumstances it may however also be desirable to allow the dilute stream to become weakly basic, in particular towards the exit of the electrodialysis step — e.g. in the last of its stages, if present — in order to cause less easily ionisable components to be ionised and thus capable of being extracted by electrodialysis. Of particular importance in this respect are phenolates which are often present in sour water but are otherwise not readily removable. Thus, whereas at a pH of 7 practically none of the phenol will be ionised, at a pH of 10 more than 30% will be ionised and thus susceptible to electrodialysis. This is particularly important where a large proportion of the total organic carbon in the sour water is comprised by phenolates, and/or formates, cyanates, carbonates, and the like.

Although the aqueous stream to be treated is normally passed to the dilute side of the electrodialysis step, it may be advantageous to pass part of it to the concentrate side — which may or may not be the smaller part. In one particular embodiment of the invention, the main part of the stream to be treated comprises the dilute stream(s) whilst the remainder of it is used as the concentrate stream(s) which is (are) arranged to flow in counter current with the dilute stream(s). The concentrate stream is concentrated to a very high degree, (e.g. in excess of 40,000 ppmw sour components and preferably up to 80,000 ppmw sour components). By so doing the volume of the concentrate stream(s) may be kept very small, say, at less than an eighth of the dilute stream(s). It may then be passed to a small, but specially adapted, steam stripper made from alloys which are capable of resisting the corrosive nature of such a stream. Stripping such a concentrated stream to an acceptable level and where it can be easily further treated by other (conventional) means requires little steam per mole of sour components removed and results in high overall efficiency, in addition to a very compact plant which may more than compensate for the more sophisticated materials required.

In practice if the concentrate contains more than about 20000 ppmw sour components (combined $NH_3$ and $H_2S$) special steels will be required for the concentrate circuit and also for the (main) stripper due to corrosion which would otherwise take place. To avoid this, the aqueous stream may at least in part be pretreated by steam stripping (possibly together with the concentrated stream(s)) prior to being passed to the electrodialysis step when it already contains a high concentration of sour components.

Although a plant for carrying out the process of the invention may not necessarily be less expensive to construct than a conventional (steam stripping) plant, for the same quality of effluent it will normally require a smaller energy input and may well be capable of meeting more stringent specifications as to the final quality of the effluent. It also has the advantage that it can easily be extended as energy becomes more expensive, in order to obtain a further saving in the energy consumption.

The invention will now be further described by way of example and explanation with reference to the accompanying drawings in which:

Figure 1 is a diagram showing the principle of electrodialysis;

Figure 2 is a schematic block diagram of a plant for carrying out the process of the invention;

Figure 3 is a schematic block diagram of an alternative embodiment of such a plant; and

Figure 4 is a schematic block diagram of a further embodiment of such a plant.

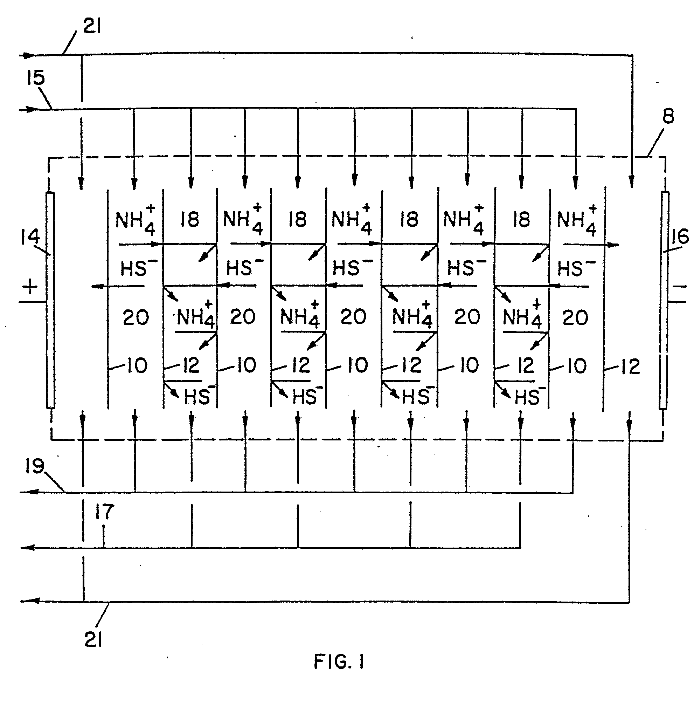

Figure 1 illustrates schematically the basic principle of an electrodialysis unit 8. Basically it comprises a plurality of membranes, alternately anodic-10- and cathodic-12- placed between an anode 14 and a cathode 16 connected to a direct current supply. The membranes 10, 12 are usually separated from each other by a distance of 1 to 5 mm using appropriate spacers and the streams in the unit may be made to flow through a labyrinth in order to increase contact with the membranes. The construction of the unit is generally in the form of a pack, more or less like a conventional filter pack.

The membranes, which usually contain ionexchange groups, have a fixed positive or negative charge.

When a direct current is applied across the two electrodes 14 and 16, anions (here represented by $HS^-$) will tend to migrate towards the anode passing the anodic membranes 10 and being stopped by the first concentrate stream. Steam stripping is furthermore also conveniently carried out to a sufficiently low concentration that in the electrodialysis steps so called "back diffusion" (i.e. reverse flow across the membranes) of ionised components does not become significant. This back diffusion may also be reduced by having the concentrate stream(s) flow in countercurrent with the dilute stream(s).

Where it is desired that the treated stream shall be very pure, e.g. sufficiently so to provide boiler feed water, it may be advantageous to use purer water in the concentrate stream(s) in the last stage or stages of the electrodialysis step.

In the electrodialysis step it is preferable that an (approximate) balance be maintained between acidic and basic components, and this can be effected by adding (back) to the dilute stream(s) a component in which it is deficient — normally an acidic one. This may either be done at the beginning or at an intermediate stage — if present — or both, and in spite of the fact that more acidic components in total will have to be removed it can lead to lower end concentrations and to economies in capital cost and operation.

In certain circumstances it may however also be desirable to allow the dilute stream to become weakly basic, in particular towards the exit of the electrodialysis step — e.g. in the last of its stages, if present — in order to cause less easily ionisable components to be ionised and thus capable of being extracted by electrodialysis. Of particular importance in this respect are phenolates which are often present in sour water but are otherwise not readily removable. Thus, whereas at a pH of 7 practically none of the phenol will be ionised, at a pH of 10 more than 30% will be ionised and thus susceptible to electrodialysis. This is particularly important where a large proportion of the total organic carbon in the sour water is comprised by phenolates, and/or formates, cyanates, carbonates, and the like.

Although the aqueous stream to be treated is normally passed to the dilute side of the electrodialysis step, it may be advantageous to pass part of it to the concentrate side — which may or may not be the smaller part. In one particular embodiment of the invention, the main part of the stream to be treated comprises the dilute stream(s) whilst the remainder of it is used as the concentrate stream(s) which is (are) arranged to flow in counter current with the dilute stream(s). The concentrate stream is concentrated to a very high degree, (e.g. in excess of 40,000 ppmw sour components and preferably up to 80,000 ppmw sour components). By so doing the volume of the concentrate stream(s) may be kept very small, say, at less than an eighth of the dilute stream(s). It may then be passed to a small, but specially adapted, steam stripper made from alloys which are capable of resisting the corrosive nature of such a stream. Stripping such a concentrated stream to an acceptable level and where it can be easily further treated by other (conventional) means requires little steam per mole of sour components removed and results in high overall efficiency, in addition to a very compact plant which may more than compensate for the more sophisticated materials required.

In practice if the concentrate contains more than about 20000 ppmw sour components (combined $NH_3$ and $H_2S$) special steels will be required for the concentrate circuit and also for the (main) stripper due to corrosion which would otherwise take place. To avoid this, the aqueous stream may at least in part be pretreated by steam stripping (possibly together with the concentrated stream(s)) prior to being passed to the electrodialysis step when it already contains a high concentration of sour components.

Although a plant for carrying out the process of the invention may not necessarily be less expensive to construct than a conventional (steam stripping) plant, for the same quality of effluent it will normally require a smaller energy input and may well be capable of meeting more stringent specifications as to the final quality of the effluent. It also has the advantage that it can easily be extended as energy becomes more expensive, in order to obtain a further saving in the energy consumption.

The invention will now be further described by way of example and explanation with reference to the accompanying drawings in which:

Figure 1 is a diagram showing the principle of electrodialysis;

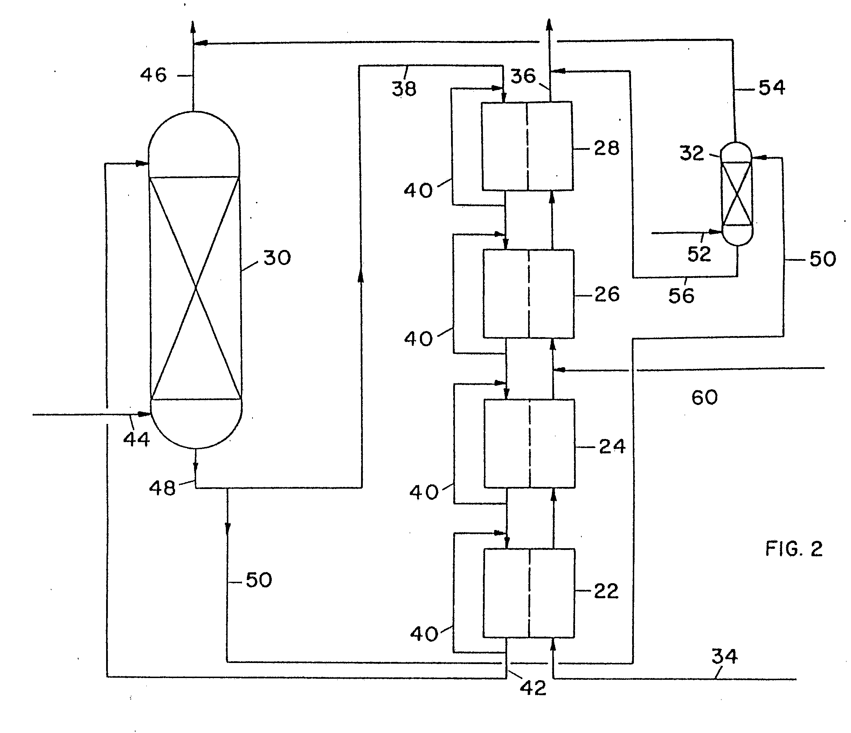

Figure 2 is a schematic block diagram of a plant for carrying out the process of the invention;

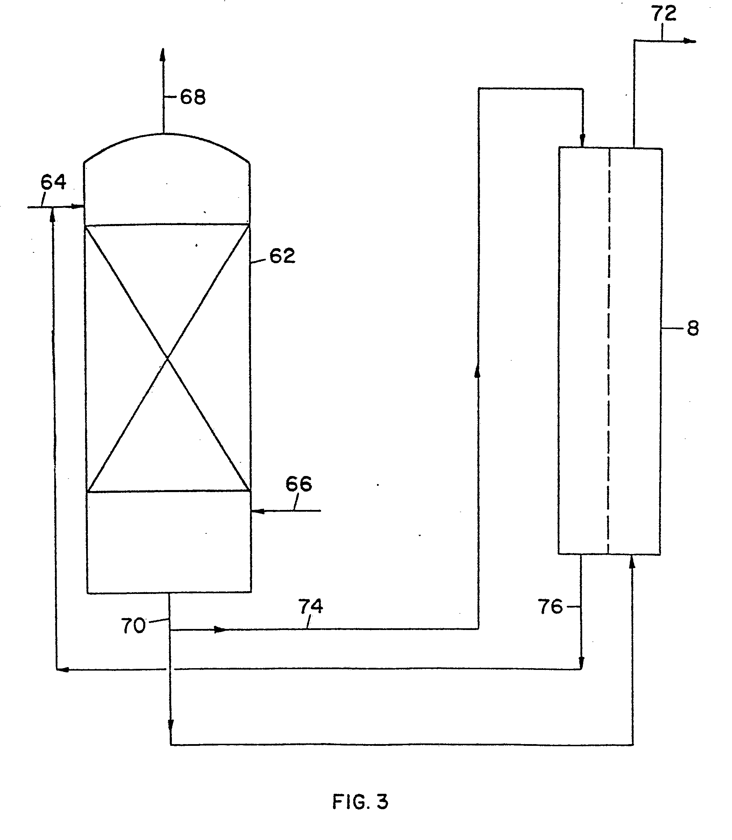

Figure 3 is a schematic block diagram of an alternative embodiment of such a plant; and

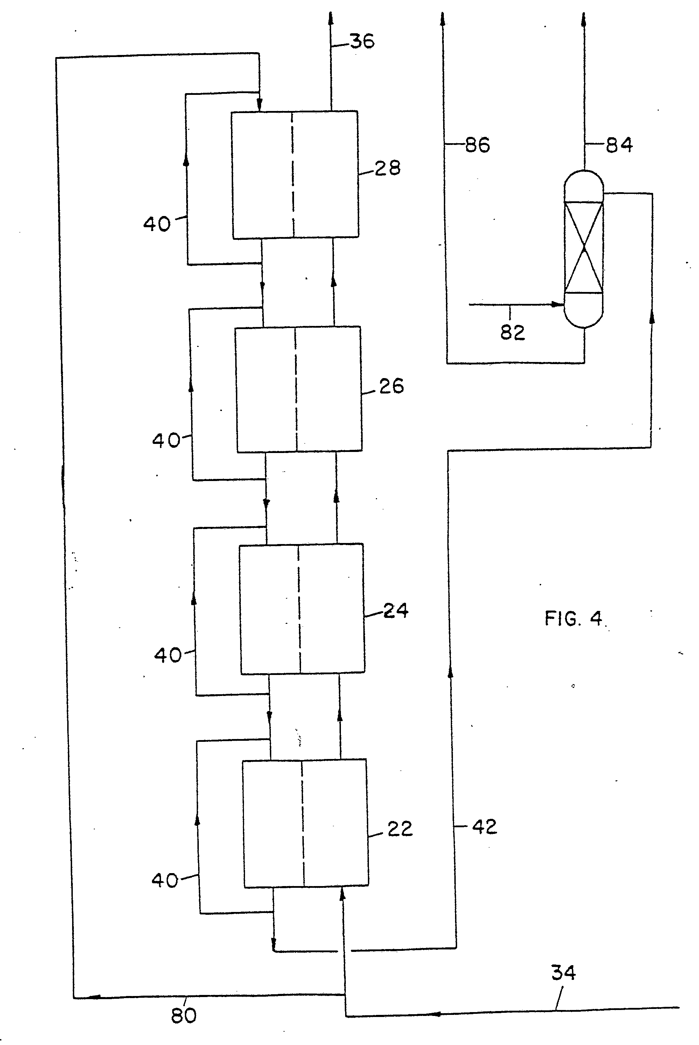

Figure 4 is a schematic block diagram of a further embodiment of such a plant.

Figure 1 illustrates schematically the basic principle of an electrodialysis unit 8. Basically it comprises a plurality of membranes, alternately anodic-10- and cathodic-12- placed between an anode 14 and a cathode 16 connected to a direct current supply. The membranes 10, 12 are usually separated from each other by a distance of 1 to 5 mm using appropriate spacers and the streams in the unit may be made to flow through a labyrinth in order to increase contact with the membranes. The construction of the unit is generally in the form of a pack, more or less like a conventional filter pack.

The membranes, which usually contain ionexchange groups, have a fixed positive or negative charge.

When a direct current is applied across the two electrodes 14 and 16, anions (here represented by HS⁻) will tend to migrate towards the anode passing the anodic membranes 10 and being stopped by the first

The concentrate stream entering the unit 28 by line 38 has 5000 ppmw $NH_3$ and 909 ppmw $H_2S$ and 4254 ppmw non-volatile salts. On leaving the unit 22 the concentrate stream has 8800 ppmw $NH_3$ and 0311 ppmw $H_2S$ and 4679 ppmw non volatile salts. 4 m³/h of low pressure steam is used in the main stripper.

It will be seen that the auxiliary stripper 32 is important in the example given in order to prevent a build up of non-volatile salts in the main stripper or in the concentrate circuit.

The plant shown in figure 3 is suitable for feeds containing very high concentrations of sour components, e.g. in excess of 20000 ppmw. The sour water to be treated enters a stripping vessel 62 by a line 64. Steam enters at 66 and stripped gases leave by line 68. The pretreated stream leaves the stripping vessel by line 70 to enter the electrodialysis stage 8. Treated water leaves by line 72. The concentrate stream is taken from the pretreated stream in line 70 by line 74 by which it enters the electrodialysis stage 8 through which it flows in countercurrent to the dilute stream. The concentrate stream, on leaving the electrodialysis stage 8 by line 76, is recombined with the feed to the stripping vessel in line 64.

Figure 4 shows a plant in which the concentrate stream can be concentrated to a very high level, e.g. in excess of 60,000 ppmw sour components. As in figure 2, a sour water stream 34 enters an electrodialysis unit and passes successive stages 22, 24, 26 and 28 arranged in series before leaving the plant as treated sour water by line 36.

A part of the feed is passed by line 80 to the last stage 28 of the electrodialysis unit to become the concentrate stream. This stream flows through the electrodialysis stages 28, 26, 24 and 22 in countercurrent with the dilute stream, and for more effective concentration is recirculated at each stage by means of feed-back loops 40.

The concentrate stream leaves electrodialysis stage 22 by line 42 leading to a small steam stripping vessel. Steam enters by line 82 and the released gases leave by line 84. Water leaves by line 86 and may be passed to conventional further waste water treatment means, such as a biotreater.

In a particular example 100 m³/h sour water at 25°C containing 6000 p-pmw $NH_3$ and $H_2S$ in a molar ratio of 1.1 to 1 was treated.

Using an effective membrane area of 4800 m with a voltage of between 3 and 4 volts/cell pair at a power consumption of 18 kWh/m³. 92 m³/h treated water leave by line 36 containing 30 ppmw $NH_3$ and 20 ppmw $H_2S$. The concentrate stream of 8 m³/h leaving the electrodialysis unit by line 42 contains approximately 80,000 ppmw $NH_3$ and $H_2S$ in a 1:1 molar ratio. In the stripping vessel 2 m³/h steam is used to reduce the $NH_3$ content of the water leaving by line 86 to 200 ppmw and that of the $H_2S$ to 20 ppmw. The non-volatile ionisable components also leave with the water by line 86.

In this example, unlike the one described with reference to Fig. 2, no balancing $H_2S$ is added. The dilute stream will tend then to become relatively richer in ammonia which will increase the pH of the stream. This has the effect of ionising some of the less easily ionisable components, and in particular any phenolates present. Experience has shown that in general 50 to 90% of the phenolates is removed with 95% of $H_2S$ in this way.

## Claims

1. Process for treating an aqueous stream to remove volatile acidic and volatile basic components, characterised in that the stream is subjected to an electrodialysis step in which acidic and basic components migrate through fixed anion and cation exchange membranes respectively to one or more concentrate streams thus forming one or more dilute streams and at least part of the concentrate stream(s) is (are) steam stripped.

2. Process as claimed in claim 1, characterised in that at least part of the concentrate stream(s) after steam stripping is recirculated to the concentrate side in the electrodialysis step.

3. Process as claimed in claim 2, characterised in that the recirculated part of the concentrated stream(s) is obtained from an intermediate stage of the steam stripping step.

4. Process as claimed in any one of claims 1—3, characterised in that part of the concentrate stream(s) is recirculated directly via a feed-back loop.

5. Process as claimed in any one of claims 1—4, characterised in that the electrodialysis step is carried out in a plurality of stages.

6. Process as claimed in any one of claims 1—5, characterised in that in the electrodialysis step the concentrate stream(s) flow(s) in countercurrent with the dilute stream(s).

7. Process as claimed in any one of claims 1—6, characterised in that a balancing stream of either an acidic component or a basic component is added to the dilute stream so as to maintain an approximate equilibrium between the two components.

8. Process as claimed in any one of claims 1—6, characterised in that the dilute stream is allowed to become weakly basic.

9. Process as claimed in any one of claims 1—8, characterised in that part of the aqueous stream is passed to the concentrate side of the electrodialysis step.

10. Process as claimed in any one of claims 1—9, characterised in that at least part of the aqueous stream is steam stripped prior to the electrodialysis step.

## Revendications

1. Procédé pour le traitement d'un courant aqueux de manière à éliminer des constituants acides volatils et basiques volatils, caractérisé en ce que le courant est soumis à une étape d'électrodialyse dans laquelle les constituants acides et basiques migrent à travers des membranes fixes échangeuses d'anions et de cations, respectivement, à un ou plusieurs courants concentrés, formant ainsi un ou plusieurs courants dilués, et on soumet à un strippage à la vapeur d'eau ou moins une partie du ou des courants concentrés.

2. Procédé selon la revendication 1, caractérisé en ce qu'au moins une partie du ou des courants concentrés après strippage à la vapeur d'eau est recyclée du côté concentré dans l'étape d'électrodialyse.

3. Procédé selon la revendication 2, caractérisé en ce que la partie recyclée du ou des courants concentrés est obtenue à partir d'un étage intermédiaire de l'étape de strippage à la vapeur d'eau.

4. Procédé selon l'une quelconque des revendications 1 à 3, caractérisé en ce qu'une partie du ou des courants concentrés est recyclée directement par une boucle de rétro-alimentation.

5. Procédé selon l'une quelconque des revendications 1 à 4, caractérisé en ce que l'étape d'électrodialyse est conduite dans une multiplicité d'étages.

6. Procédé selon l'une quelconque des revendications 1 à 5, caractérisé en ce que dans l'étape d'électrodialyse le ou les courants concentrés circulent à contre-courant par rapport au courant ou aux courants dilués.

7. Procédé selon l'une quelconque des revendications 1 à 6, caractérisé en ce qu'un courant d'équilibrage d'un constituant acide ou d'un constituant basique est ajouté au courant dilué de manière à maintenir un équilibre approximatif entre les deux constituants.

8. Procédé selon l'une quelconque des revendications 1 à 6, caractérisé en ce qu'on laisse le courant dilué devenir faiblement basique.

9. Procédé selon l'une quelconque des revendications 1 à 8, caractérisé en ce qu'une partie du courant aqueux est passée du côté concentré de l'étape d'électrodialyse.

10. Procédé selon l'une quelconque des revendications 1 à 9, caractérisé en ce qu'au moins une partie du courant aqueux est soumise à un strippage à la vapeur d'eau avant l'étape d'électrodialyse.

**Patentansprüche**

1. Verfahren zur Behandlung eines wäßrigen Stromes zur Entfernung von flüchtigen sauren und flüchtigen basischen Bestandteilen, dadurch gekennzeichnet, daß der Strom einer Elektrodialysestufe unterworfen wird, in der saure und basische Bestandteile durch fixierte Anionen-bzw. Kationenaustauschermembranen hindurch gehen zu einem oder mehreren Konzentratströmen, wobei ein oder mehrere verdünnte Ströme entstehen, und zumindest ein Teil des Konzentratstromes (der Konzentratströme) mit Dampf abgestreift wird.

2. Verfahren nach Anspruch 1, dadurch gekennzeichnet, daß zumindest ein Teil des Konzentratstromes (der Konzentratströme) nach dem Abstreifen mit Dampf wieder in die Konzentratseite bei der Elektrodialysestufe zurückgeführt wird.

3. Verfahren nach Anspruch 2, dadurch gekennzeichnet, daß der zurückgeführte Teil des Konzentratstromes (der Konzentratströme) von einer Zwischenstufe der Dampf-Abstreifstufe erhalten wird.

4. Verfahren nach einem der Ansprüche 1 bis 3, dadurch gekennzeichnet, daß ein Teil des Konzentratstromes (der Konzentratströme) direkt über eine Rückführungsschleife zurückgeführt wird.

5. Verfahren nach einem der Ansprüche 1 bis 4, dadurch gekennzeichnet, daß die Elektrodialysestufe mehrstufig durchgeführt wird.

6. Verfahren nach einem der Ansprüche 1 bis 5, dadurch gekennzeichnet, daß in der Elektrodialysestufe der Konzentratstrom (die Konzentratströme) im Gegenstrom zu dem verdünnten Strom (den verdünnten Strömen) fließt (fließen).

7. Verfahren nach einem der Ansprüche 1 bis 6, dadurch gekennzeichnet, daß ein Ausgleichsstrom entweder eines sauren Bestandteils oder eines basischen Bestandteils zu dem verdünnten Strom zugesetzt wird, um ein ungefähres Gleichgewicht zwischen den beiden Bestandteilen aufrechtzuerhalten.

8. Verfahren nach einem der Ansprüche 1 bis 6, dadurch gekennzeichnet, daß man den verdünnten Strom schwach basisch werden läßt.

9. Verfahren nach einem der Ansprüche 1 bis 8, dadurch gekennzeichnet, daß ein Teil des wäßrigen Stromes in die Konzentratseite der Elektrodialysestufe geleitet wird.

10. Verfahren nach einem der Ansprüche 1 bis 9, dadurch gekennzeichnet, daß zumindest ein Teil des wäßrigen Stromes vor der Elektrodialysestufe mit Dampf abgestreift wird.

NH$_4^+$ 18 NH$_4^+$ 18 NH$_4^+$ 18 NH$_4^+$ 18 NH$_4^+$

HS$^-$ HS$^-$ HS$^-$ HS$^-$ HS$^-$

+ 14

16

20 NH$_4^+$ 20 NH$_4^+$ 20 NH$_4^+$ 20 NH$_4^+$ 20

10 12 10 12 10 12 10 12 10 12

HS$^-$ HS$^-$ HS$^-$ HS$^-$

21 15 8

19 17 21

FIG. I

FIG. 2

FIG. 3

0 013 050

FIG. 4